# EUROPEAN PATENT SPECIFICATION

(11) **EP 1 210 856 B1**
(45) Date of publication and mention of the grant of the patent: **03.01.2007**
(21) Application number: 01309889.2
(22) Date of filing: 23.11.2001
(51) Int. Cl.: A01C 7/00

(54) **Seed drill**
EInzelkornsämaschine
Semoir

(30) Priority: 24.11.2000 GB 0028601; 30.08.2001 GB 0120967
(43) Date of publication of application: 05.06.2002
(73) Proprietor: Moore, Samuel, Ballymoney BT53 6PP, Northern Ireland (GB)
(72) Inventor: Moore, Samuel, Ballymoney BT53 6PP, Northern Ireland (GB)
(74) Representative: Spall, Christopher John

(56) References cited:
- GB-A- 1 218 785
- GB-A- 2 040 656
- GB-A- 2 127 263
- US-A- 4 506 609
- US-A- 5 357 884

## Description

This invention relates to agricultural sowing of seeds by the technique of slit sowing in which seeds are implanted in slits or narrow slots cut in the ground, not necessarily cultivated or otherwise prepared except, in suitable cases, where vegetation is killed by the application of suitable chemicals.

Essentially, the invention is concerned with apparatus for preparing and seeding ground in which seeds from a seed box mounted on a frame assembly for connection to a towing vehicle are delivered through coulters and into slits in the ground, and ground engaging rotatable members for rotation about a generally transverse axis are adapted to compact the ground and close the slits after seeds have been implanted therein. Apparatus of this kind will herein after be referred to as "apparatus of the kind set forth".

When used herein the term "coulter" is to be interpreted as meaning any type of device through which seeds can be delivered into a slit, such as a disc, a disc and tyne, a rigid tyne, a spring tyne, a suffolk tyne, a knife opener, and the like.

In GB 1 218 785 apparatus of the kind set forth is disclosed in which the frame assembly comprises first and second relatively moveable frames, of which the first frame comprises a draw bar for connection to a towing vehicle and the second frame forms a mounting for a plurality of spaced substantially parallel longitudinally extending arms biased away from the second frame by resilient means, and a connection is provided between the second frame and the draw bar by adjustment of which the loading on the apparatus applied to the discs can be varied to control the depth of the slits thus produced. Each arm assembly comprises a pair of discs and a pair of ground compacting rollers, and the discs on adjacent arm assemblies may be staggered longitudinally whereby the discs on alternative assemblies are aligned transversely.

We are also aware of U.S. Patent No. 5 357 884, which defines the pre-characterising portion of claim 1. Adjustable rollers control the depth of cut of the coulters.

The invention refers to a

seed drill in which seeds from a seed box mounted on a frame assembly (1) for connection to a towing vehicle are delivered through coulters (9,10) and into slits in the ground and ground engageable rotatable members (7,8) are adapted to compound the ground and close the slits after seeds have been implanted therein, in which the frame assembly is supported at opposite ends on front and rear sets of ground engaging rotatable members (7, 8; 24) and the rotatable members of at least one of the sets or the coulters themselves are adapted to be raised and lowered with respect to the frame assembly to determine the depth of cut, characterised in that the frame assembly comprises a first frame (2) for connection to a towing vehicle and a second frame (3) comprising a plurality of hanging drag arms (4) which form a mounting for a plurality of transversely spaced disc coulters (9,10), the second frame being suspended from the first by spring means (5), in which the rotatable member for closing the slits (7,8) are provided in pairs at the trailing end of each drag arm (4) with the axes of the rollers being staggered in the longitudinal direction and in which a ground engaging rotatable member (24) comprising a roller is journalled for rotation at the leading end of each drag arm.

Preferably the ground engaging rotatable members of both sets are adapted to be raised or lowered with respect to the frame assembly.

Each coulter may be adjustably mounted on the frame assembly for movement through an arc to enable the delivery angle of the coulter to be adjusted to suit the depth of a slit cut by a corresponding disc.

At a relatively shallow seeding depth the coulter can be disposed at a rearwardly facing angle with respect to the ground. However, at a greater seeding depth, the coulter can be disposed at a forward facing angle which helps to ensure that seeds are deposited in the slits at a desired depth.

Each coulter is disposed adjacent to a face of a corresponding rotatable disc to comprise a disc coulter.

Preferably pairs of disc coulters are suspended from the frame assembly on a common suspension.

Conveniently the frame assembly comprises a first frame for connection to a towing vehicle and a second frame comprising of plurality of hanging dragarms which form a mounting for a plurality of transversely spaced disc coulters, the second frame being suspended from the first by spring means.

The spring means may comprise coil springs, flat springs, leaf springs, both at the front and rear of the apparatus.

In one construction the springs at the forward or leading end of the apparatus comprise compression springs.

In another construction the springs at both ends comprise compression springs.

Each dragarm provides a mounting for a pair of discs which are suspended at the leading end of the arm, and of which the depth and the angle of the coulter can be adjusted by a pair of adjusters of which one acts between the two discs and the other between the coulter and the dragarm.

Each pair of discs is preferably coupled to the dragarm by a pivot arm which takes the pull from the draw bar.

In addition the rollers for closing the slits are provided in pairs at the trailing end of each dragarm with the axis of the roller being staggered in a longitudinal direction. This helps performance on stony land or wet soil and the rollers are arranged to intermesh in similar method of a gear in order to become self cleaning.

The rollers may comprise of steel or similar press wheels, plastic wheels or wheels provided with rubber tyres in which the tyres may be of zero pressure.

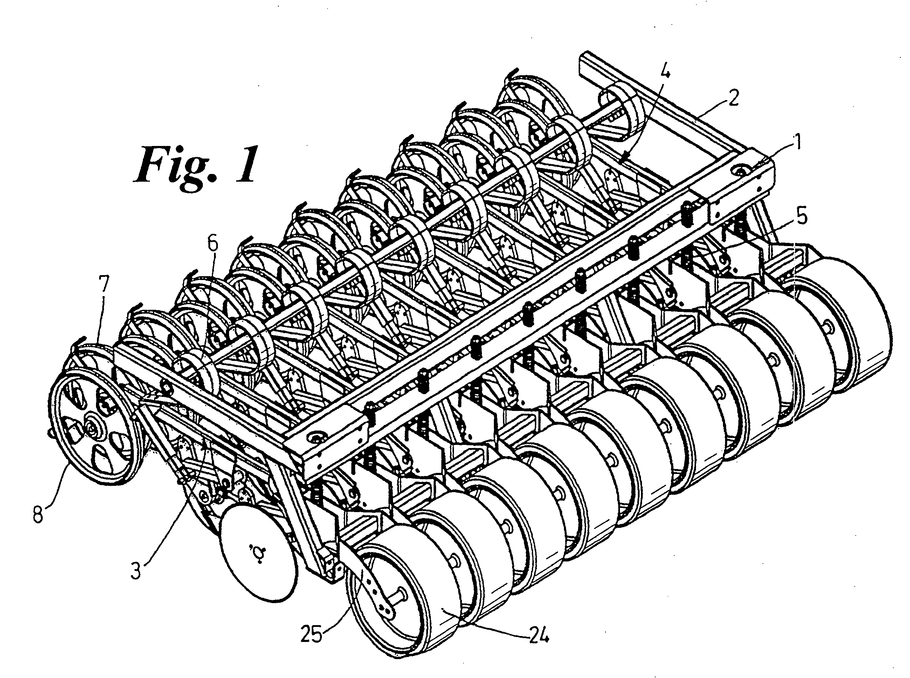

Some embodiments of our invention are illustrated in the accompanying drawings in which:-
**Figure 1** is a perspective view of a seed drill;
**Figure 2** is a side view of the drill with the coulter in use at a shallow seeding depth;
**Figure 3** is a view similar to Figure 2 but with the coulter at a deeper seeding depth;
**Figure 4** is a perspective view similar to Figure 1 but showing a modified seed drill;
**Figure 5** is a side view of the drill of Figures 4 and 5;
**Figure 6** shows a drag arm of Figure 5 on an enlarged scale, in combination with the front depth rollers and rear depth wheels;
**Figure 7** shows the range of adjustment of the rollers and wheels of Figures 5 and 6;
**Figure 8** is a perspective view of an adjustment mechanism for one pair of rear wheels of Figure 7;
**Figure 9** is a perspective view of an adjustment mechanism for one of the front rollers of Figure 7;
**Figure 10** is a side view of a modified front depth roller; and
**Figure 11** is a plan view of the same; and
**Figure 12** is a view through a suspension spring.

The seed drill illustrated in the drawings comprises a frame assembly 1 comprising a first upper frame 2 coupled to a draw bar for connection to a towing vehicle, and a second lower frame 3. The lower frame 3 comprises a plurality of transversely spaced longitudinally trailing dragarms 4. Each dragarm is suspended at its forward or leading end from the upper frame 2 by means of a coil spring 5 and towards its rear or trailing end by means of a leaf spring generally in the form of an "S" tyne, or a coil spring 6 similar to the spring 5. Each dragarm 4 is also pivotally connected at its forward or leading end of the frame 2 through a swinging arm 19 and through which the dragarm 4 is towed. The swinging arm 19 is pivotally connected at both ends between the frame and the dragarm 4.

A pair of ground engaging rotatable members comprising compacting wheels 7 and 8 are journalled for rotation at the trailing end of the dragarm 4 and are staggered longitudinally so that the wheels mesh in a manner similar to gears in order to assist in following ground contours and help performance on stony land or wet soil. Since the wheels intermesh a self cleaning action is achieved.

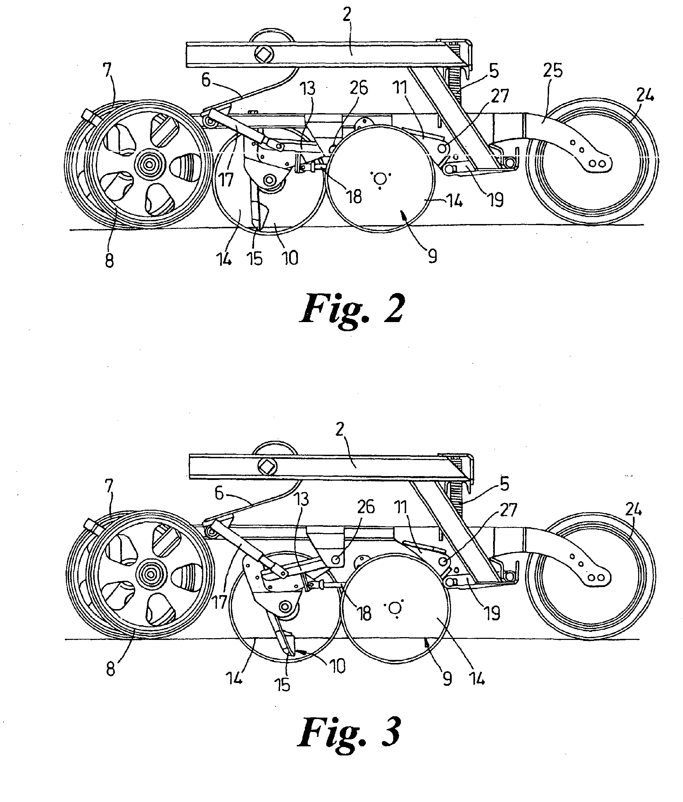

A pair of disc coulters 9 and 10 are pivotally mounted on the dragarm 4 being carried from brackets 11 and 12 through respective pivotal arms of which only the arm 13 is shown. Each disc coulter comprises a disc 14 and a coulter 15 depending from the respective arm 13 and disposed adjacent to one face of the disc 14. The angle of the arm 13, and hence the position of the disc coulter is controlled by a screw adjuster 17, the extension of which causes the disc coulter 10 to move from the position illustrated in Figure 2 of the drawings to that shown in Figure 3 of the drawings. The relative position of the two disc coulters 9 and 10 is adjusted by a screw adjuster 18 acting between them but the bracket 11 is attached to the dragarm 4 through an arm 20 which takes the pull on the draw bar and is pivotally connected at both ends between the draw bar and the bracket 11 by means of pivot means 21 and 22.

A ground engaging rotatable member comprising a roller 24 is journalled for rotation in a fork 25 at the leading end of each draw bar.

The rollers 24 act to break clods of earth and otherwise compact the soil to enable more definite and better defined slots to be cut by the discs 14.

In operation adjustment in the length of the two screw adjusters 17 and 18 enables the depth of a slit to be cut by a disc to be determined. Angular movement of the arm 13 about a pivotal connection 26 from the bracket adjusts effective height of the disc 14 and this movement is accompanied by angular movement of the coulter 15 through an arc. This is also carried from the arm 13. Thus as the depth of cut is increased from the shallow seeding depth illustrated in Figure 2, where the coulter 15 is presented at a shallow angle, increase in the seeding depth is accompanied by an increase in forward facing angle which helps to ensure that seeds are deposited in the slit at a desired depth. At the relatively shallow seeding depth illustrated in Figure 2 of the drawings the coulter 15 is disposed at a rearwardly facing angle with respect to the ground. However, at the greater seeding depth illustrated in Figure 3 of the accompanying drawings, the coulter 15 is disposed at a forward facing angle.

Adjustment in the length of the screw adjuster 18 enables the axis of rotation of the two disc coulters 9 and 10 to be maintained in horizontal alignment with the disc coulter 9 pivoting about pivot 27 as an axis.

Control of the depth of the slits is therefore achieved by the suspension of the disc coulters 9 and 10 from between the axis of rotation of the wheels 7 and 8 and the rollers 24.

Since the dragarms are dependently sprung from one another, they can move independently to accommodate variation in ground contours, thereby achieving a substantially uniform sowing pattern, irrespective of the terrain.

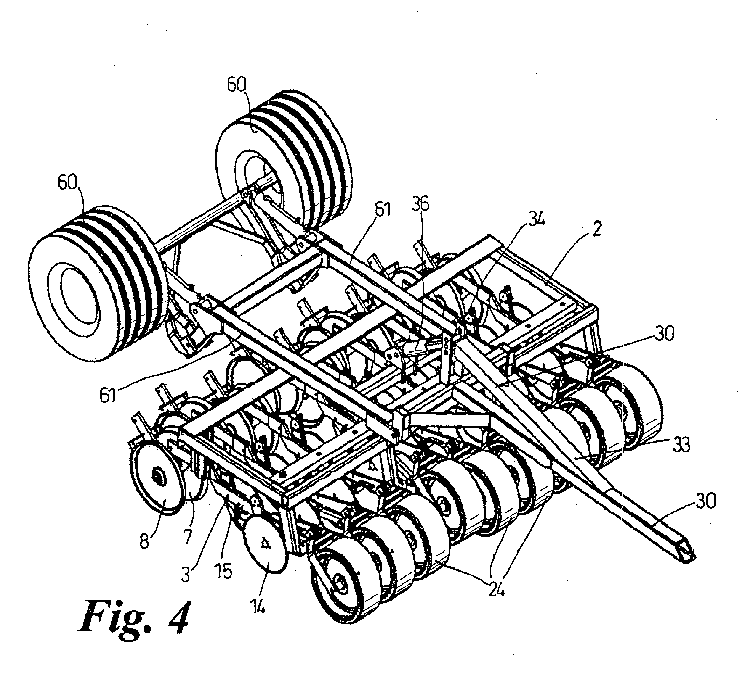

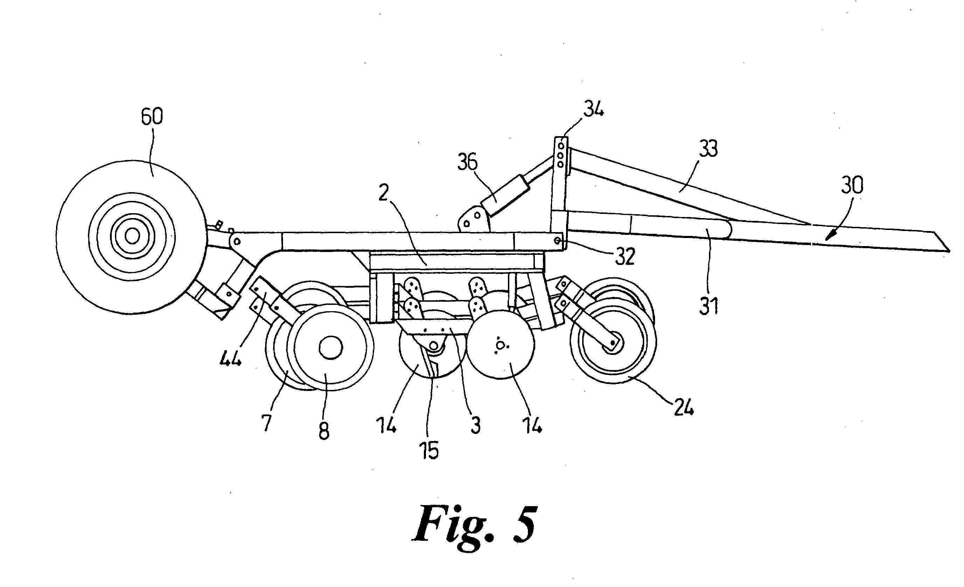

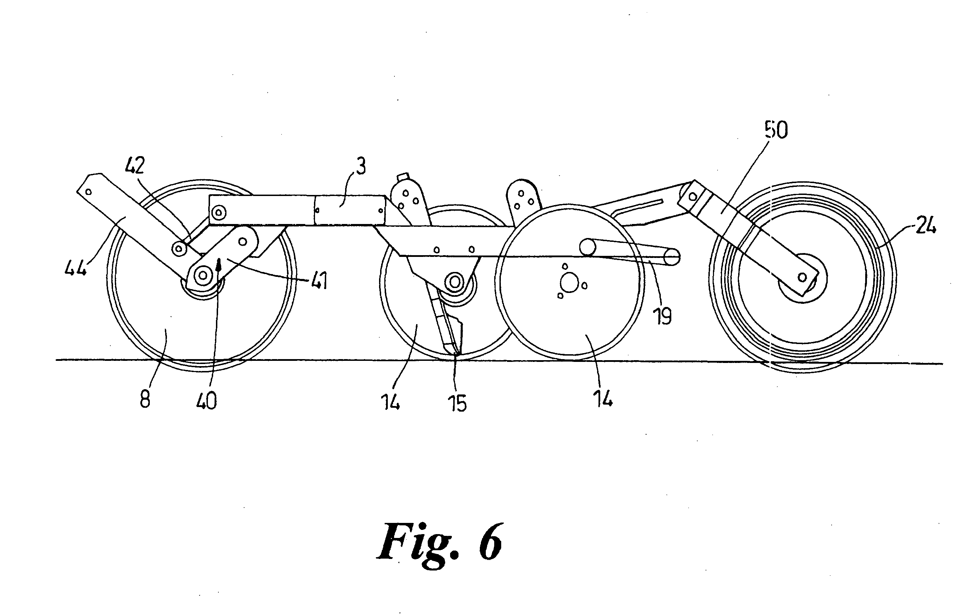

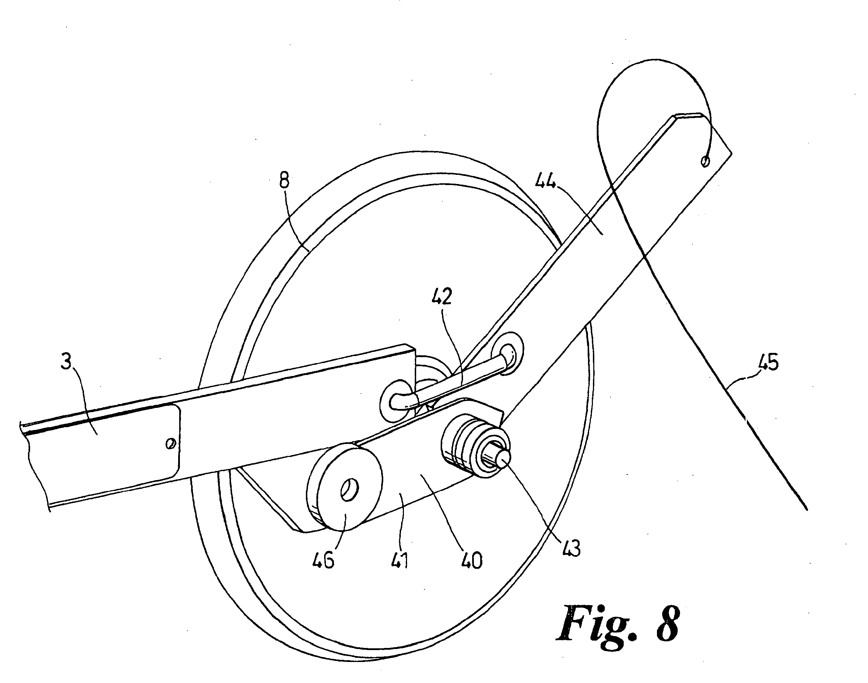

In the seed drill illustrated in Figures 4-9 of the accompanying drawings, a draw bar 30 for connection to a towing vehicle comprises a towing arm 31 coupled to the frame 2 through a pivotal connection 32 and a support strut 33 which extends rearwardly of the arm 31 and is connected at its rear, upper, end to a bifurcated bracket 34 in turn connected to the frame 2 through the pivotal connections 32. A strut in the form of an hydraulic ram 36 acts between the upper end of the bracket 34 and the frame 2.

Normally the seed drill can float with the drag arms 4 moving independently of each other as described above. However, by adjusting the effective length of the hydraulic ram 36, weight can be transferred from the towing vehicle onto the front rollers 24 or onto the rear wheels 7,8 as conditions dictate.

The rear wheels 7,8 are carried from the second frame 3 through an adjuster mechanism comprising a parallelogram linkage 40. The linkage 40 comprises parallel links 41,42, each pivotally connected at one end to the frame 3. The link 41 is coupled at its other end to the axle 43 for the wheels 7,8 and the other link 42 coupled at its other end to an arm 44 extending rearwardly from the axle.

A harrow tyne 45 trails from the free end of the arm 44 for contact with the base of the cut.

The pivotal connection between the link 41 and the frame 3 comprises a serrated lock washer 46 which can be released by release of a lock nut to allow the wheels 7,8 to be raised and lowered relative to the frame (Figure 4). The nut and washer 46 are re-tightened to hold the wheels 7,8 in the desired position.

In a modification the adjuster mechanism comprises a screw jack or similar means acting between the dragarm 4 and an arm in which the wheel 7,8 is journalled for rotation.

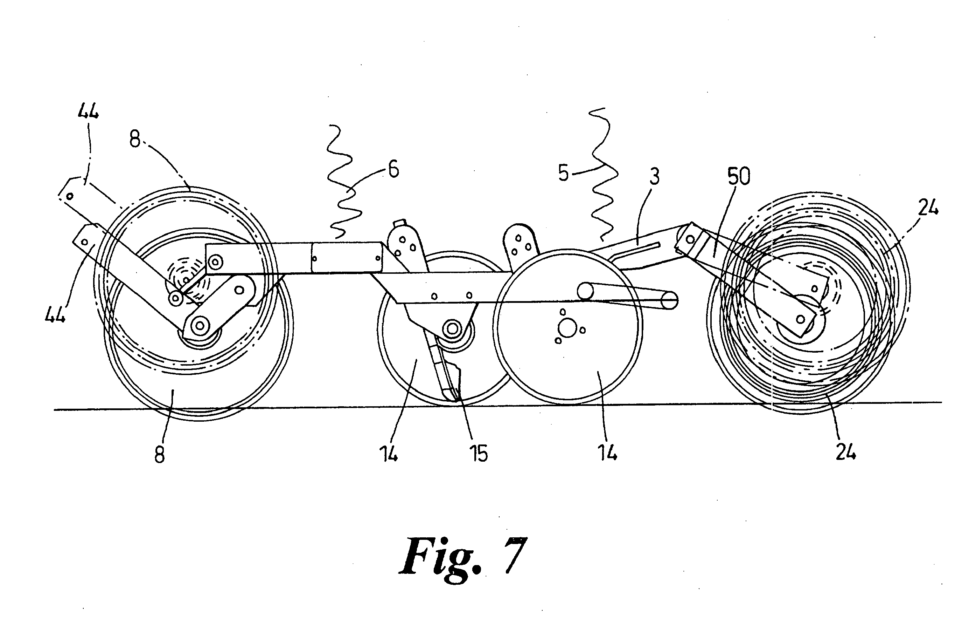

Each roller 24 is carried from the forward end of the second frame 3 through a bifurcated arm 50 which is pivotally connected to the frame 3 through a serrated locking washer 51. Each arm 50 is angularly moveable relative to the second frame 3 by releasing a lock nut and the washer 51 to determine the depth of the roller 24 and hence the depth of cut (Figure 7). The nut and washer are re-tightened to hold the roller 24 in the adjusted position.

In the seed drill described above with reference to Figures 4-9 of the accompanying drawings the rear wheels 7,8, and the rollers 24, can be raised and lowered relative to the dragarm 4 to determine the depth of cut of the discs 14. Thus the depth of cut can be determined by raising or lowering either the set of rear wheels 7,8 or the set of rollers 24 relative to the dragarms 4, or by raising or lowering each set relative to the other.

In addition each of the compression springs 5 and 6 may be positioned forward or rearward of the respective sets of ground engaging rollers 24 or the compacting wheels 7 and 8.

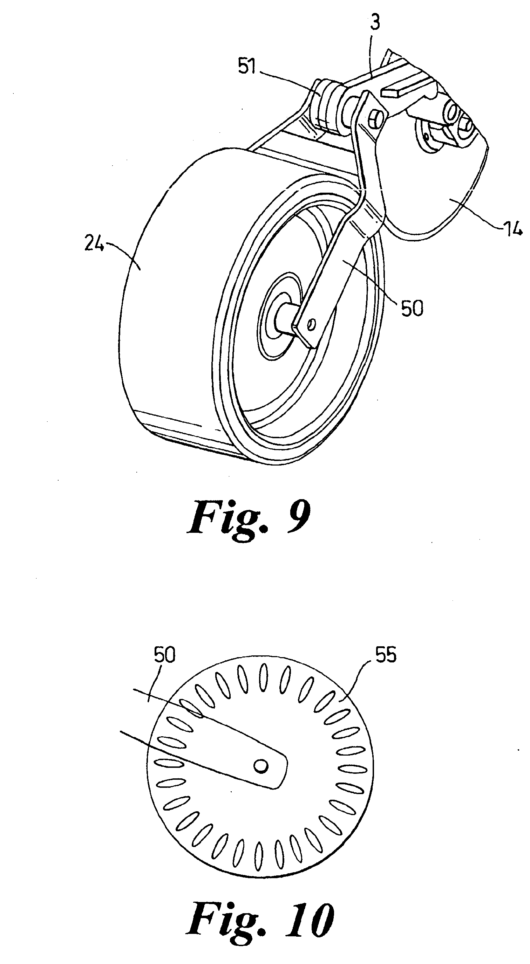

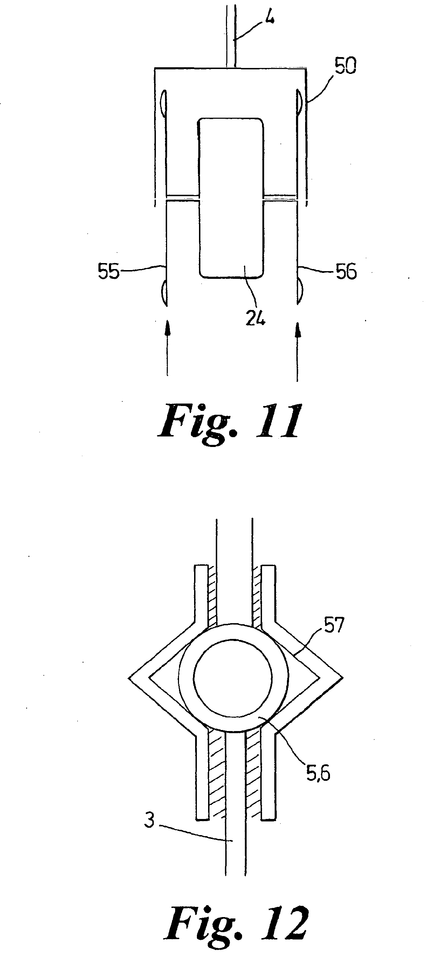

In the modification shown in Figures 10 and 11 of the accompanying drawings a pair of fluted or serrated disc 55,56 of equal diameters greater than that of the roller 24 are disposed on opposite sides of the roller and are arranged to run in front of the roller. This facilitates any penetration of the roller 24 into the ground to determine the depth of cut.

In the seed drills described above one or each of the compression springs 5 and 6 is encapsulated in a pocket 57 in the frame assembly as illustrated in Figure 12 of the accompanying drawings. This increases rigidity between the upper frame 2 and the lower frame 3, and reduces any tendency for movement in a transverse direction.

In the seed drills of Figures 4-11 of the accompanying drawings a pair of road wheels 60 are mounted on a pair of beams 61 which extend rearwardly from the frame 2 beyond the wheels 7,8. The road wheels 60 are moveable between an inoperative retracted position illustrated when the drill is used for seeding, and an operative road engaging position during transit with the weight of the drill taken by the road wheels 60 as the drill is towed by the towing vehicle through the draw bar.

## Claims

1. A seed drill in which seeds from a seed box mounted on a frame assembly (1) for connection to a towing vehicle are delivered through coulters (9,10) and into slits in the ground and ground engageable rotatable members (7, 8) are adapted to compound the ground and close the slits after seeds have been implanted therein, in which the frame assembly is supported at opposite ends on front and rear sets of ground engaging rotatable members (7, 8; 24) and the rotatable members of at least one of the sets or the coulters themselves are adapted to be raised and lowered with respect to the frame assembly to determine the depth of cut, **characterised in that** the frame assembly comprises a first frame (2) for connection to a towing vehicle and a second frame (3) comprising a plurality of hanging drag arms (4) which form a mounting for a plurality of transversely spaced disc coulters (9,10), the second frame being suspended from the first by spring means (5), in which the rotatable member for closing the slits (7.8) are provided in pairs at the trailing end of each drag arm (4) with the axes of the rollers being staggered in the longitudinal direction and in which a ground engaging rotatable member (24) comprising a roller is journalled for rotation at the leading end of each drag arm.

2. A seed drill as claimed in Claim 1, in which each coulter (9, 10) is adjustably mounted on the frame assembly for movement through an arc to enable the delivery angle of the coulter to be adjusted to suit the depth of a slit.

3. Apparatus as claimed in Claim 2, in which at a relatively shallow seeding depth the coulter is disposed at a rearwardly facing angle with respect to the ground, and at a greater seeding depth, the coulter is disposed at a forward facing angle.

4. Apparatus as claimed in any preceding claim in which each coulter is disposed adjacent to a face of a corresponding rotatable disc (14) to comprise a disc coulter.

5. Apparatus as claimed in Claim 4 in which pairs of disc coulters (9, 10) are suspended from the frame assembly on a common suspension.

6. Apparatus as claimed in any preceding Claim, 2, in which the spring means (5) comprise coil springs, flat springs, leaf springs, both at the front and rear of the apparatus.

7. Apparatus as claimed in Claim 6, in which the springs (5) at the forward or leading ends of the apparatus comprise compression springs.

8. Apparatus as claimed in any preceding Claim, in which each dragarm (4) provides a mounting for a pair of discs (14) which are suspended at the leading end of the arm, and of which the depth and the angle of the coulter can be adjusted by a pair of adjusters (17, 18) of which one acts between the two discs and the other between the coulter and the dragarm.

9. Apparatus as claimed in Claim 8, in which each pair of discs (14) is coupled to the dragarm by a pivot arm (20) which takes the pull from the draw bar.

10. Apparatus as claimed in any preceding Claim, in which the rollers comprise steel or similar press wheels, plastic wheels or wheels provided with rubber tyres.

## Patentansprüche

1. Eine Drillmaschine, in welcher Saatgut aus einem Saatgutbehälter, der auf einer Rahmenanordnung (1) zur Verbindung zu einem Schleppfahrzeug montiert ist, mittels Schlitzvorrichtungen (9, 10) in Schlitze in die Erde abgegeben wird und worin mit dem Erdboden zusammenwirkende drehbare Elemente (7, 8) eingerichtet sind, den Erdboden zu mischen und die Schlitze zu schließen, nachdem Saatgut darin eingepflanzt worden ist, wobei die Rahmenanordnung an gegenüberliegenden Enden auf fordere und hintere Sätze von mit dem Erdboden zusammenwirkenden drehbaren Elementen (7, 8; 24) gestützt ist und wobei die drehbaren Elemente von mindestens einem der Sätze oder die Schlitzvorrichtungen selbst eingerichtet sind, bezüglich der Rahmenanordnung angehoben und abgesenkt zu werden, um die Tiefe des Schnitts zu bestimmen, **dadurch gekennzeichnet, dass** die Rahmenanordnung einen ersten Rahmen (2) zur Verbindung zu einem Schleppfahrzeug und einen zweiten Rahmen (3), der eine Mehrzahl von hängenden Schlepparmen (4) umfasst, welche eine Halterung für eine Mehrzahl von querbeabstandeten Scheibenschlitzvorrichtungen (9, 10) bilden umfasst, wobei der zweite Rahmen vom ersten durch eine Federeinrichtung aufgehängt ist, wobei die drehbaren Elemente zum Schließen der Schlitze (7, 8) paarweise am nachlaufenden Ende jedes Schlepparmes (4) vorgesehen sind, wobei die Achsen der Rollen in Längsrichtung gestaffelt sind, und wobei ein mit dem Erdboden zusammenwirkendes Element (24), das eine Rolle umfasst, zum Drehen am führenden Ende jedes Schlepparms aufgehängt ist.

2. Drillmaschine gemäß Anspruch 1, wobei jede Schlitzvorrichtung (9, 10) an der Rahmenanordnung einstellbar montiert ist für eine bogenförmige Bewegung, um es dem Abgabewinkel der Schlitzvorrichtung zu ermöglichen eingestellt zu werden, um der Tiefe des Schlitzes zu genügen.

3. Gerät gemäß Anspruch 2, wobei bei relativ flacher Sätiefe die Schlitzvorrichtung in einem bezüglich des Erdbodens nach hinten gewandten Winkel angelegt ist und bei größerer Sähtiefe die Schlitzvorrichtung in einem nach vorne gewandten Winkel angelegt ist.

4. Gerät gemäß einem der vorangehenden Ansprüche, wobei jede Schlitzvorrichtung benachbart zu einer Seite einer zugehörigen drehbaren Scheibe (14) angeordnet ist, um eine Scheibenschlitzvorrichtung zu bilden.

5. Gerät gemäß Anspruch 4, wobei Paare von Scheibenschlitzvorrichtungen (9, 10) an einer gemeinsamen Aufhängung an der Rahmenanordnung aufgehängt sind.

6. Gerät gemäß einem der vorangehenden Ansprüche, wobei die Federeinrichtung (5) Spiralfedern, Blattfedern, Bandfedern sowohl vorne als auch hinten am Gerät umfasst.

7. Gerät gemäß Anspruch 6, wobei die Federn (5) am vorderen oder führenden Ende des Gerätes Druckfedern umfassen.

8. Gerät gemäß einem der vorangehenden Ansprüche, wobei jeder Schlepparm (4) eine Halterung für ein Paar von Scheiben (14) vorsieht, die am führenden Ende des Armes aufgehängt sind, und von welchen die Tiefe und der Winkel der Schlitzvorrichtung mittels eines Paares von Einstellern (17, 18) eingestellt werden kann, von welchen einer zwischen den zwei Scheiben und der andere zwischen der Schlitzvorrichtung und dem Schlepparm agiert.

9. Gerät gemäß Anspruch 8, wobei jedes Paar von Scheiben (14) mit dem Schlepparm mittels eines Schwenkarms (20) gekoppelt ist, welcher den Zug von der Schleppstange aufnimmt.

10. Gerät gemäß einem der vorangehenden Ansprüche, wobei die Rollen Stahl oder ähnliche Pressräder, Kunststoffräder oder Räder mit Gummireifen umfassen.

## Revendications

1. Semoir en ligne, dans lequel les semences provenant d'une trémie de semoir montée sur un ensemble de bâti (1) devant être raccordé à un véhicule remorqueur sont délivrées par l'intermédiaire de coutres (9, 10) et dans des sillons dans le sol, et des éléments rotatifs pouvant s'engager dans le sol (7, 8) sont adaptés pour mélanger le sol et fermer les sillons une fois que les semences ont été introduites à l'intérieur, dans lequel l'ensemble de bâti est supporté, au niveau des extrémités opposées, sur des ensembles avant et arrière d'éléments rotatifs pouvant s'engager dans le sol (7, 8, ; 24), et les éléments rotatifs d'au moins l'un des ensembles de coutres proprement dits sont adaptés pour être soulevés et abaissés par rapport à l'ensemble de bâti afin de déterminer la profondeur de la coupe, **caractérisé en ce que** l'ensemble de bâti comprend un premier bâti (2) devant être raccordé à un véhicule remorqueur, et un deuxième bâti (3) comprenant une pluralité de bras de traction en suspension (4) qui forment un support pour une pluralité de coutres circulaires (9, 10) espacés transversalement, le deuxième bâti étant suspendu au premier par des moyens de ressort (5), moyennant quoi l'élément rotatif permettant de fermer les sillons (7, 8) sont prévus par paires à l'extrémité de queue de chaque bras de traction (4), les axes des rouleaux étant décalés dans la direction longitudinale, et moyennant quoi les éléments rotatifs pouvant s'engager dans le sol (24) comprenant un rouleau est amené à tourner au niveau de l'extrémité de tête de chaque bras de traction.

2. Semoir en ligne selon la revendication 1, dans lequel chaque coutre (9, 10) est monté de manière ajustable sur l'ensemble de bâti pour effectuer un mouvement en forme d'arc afin que l'angle de dégagement du coutre soit ajusté pour correspondre à la profondeur d'un sillon.

3. Appareil selon la revendication 2, dans lequel, à une profondeur d'ensemencement relativement faible, le coutre est disposé selon un angle orienté vers l'arrière par rapport au sol et, à une plus grande profondeur d'ensemencement, le coutre est disposé selon un angle orienté vers l'avant.

4. Appareil selon l'une quelconque des revendications précédentes, dans lequel chaque coutre est disposé de manière adjacente à une face d'un disque rotatif (14) correspondant pour comprendre un coutre circulaire.

5. Appareil selon la revendication 4, dans lequel les paires de coutres circulaires (9, 10) sont suspendues à l'ensemble de bâti avec une suspension commune.

6. Appareil selon la revendication 2, dans lequel les moyens de ressort (5) comprennent des ressorts hélicoïdaux, ressorts plats, ressorts à lames, à la fois à l'avant et à l'arrière de l'appareil.

7. Appareil selon la revendication 6, dans lequel les ressorts (5) qui se trouvent au niveau des extrémités avant ou de tête de l'appareil comprennent des ressorts de compression.

8. Appareil selon l'une quelconque des revendications précédentes, dans lequel chaque bras de traction (4) constitue un support pour une paire de disques (14) qui sont suspendus au niveau de l'extrémité de tête du bras, et sur lesquels la profondeur et l'angle du coutre peuvent être ajustés par une paire d'ajusteurs (17, 18), l'un d'entre eux agissant entre les deux disques et l'autre entre le coutre et le bras de traction.

9. Appareil selon la revendication 8, dans lequel chaque paire de disques (14) est couplée au bras de traction par un bras pivotant (20) qui prend en compte la traction provenant de la barre de remorquage.

10. Appareil selon l'une quelconque des revendications précédentes, dans lequel les rouleaux comprennent des roues plombeuses en acier ou similaire, des roues en plastique ou des roues dotées de pneus en caoutchouc.
